# EUROPÄISCHE PATENTSCHRIFT

(11) **EP 4 471 462 B1**
(45) Veröffentlichungstag und Bekanntmachung des Hinweises auf die Patenterteilung: **14.10.2026**
(21) Anmeldenummer: 23176915.9
(22) Anmeldetag: 02.06.2023
(51) Int. Cl.: G01T 1/178

(54) **ALPHASTRAHLENDETEKTOR**
ALPHA RAY DETECTOR
DÉTECTEUR DE RAYONS ALPHA

(43) Veröffentlichungstag der Anmeldung: 04.12.2024
(73) Patentinhaber: Corant GmbH, 04229 Leipzig (DE)
(72) Erfinder: Lehmann, Daniel, 04229 Leipzig (DE)
(74) Vertreter: Steiniger, Carmen

(56) Entgegenhaltungen:
- EP-A2- 0 470 054
- WO-A1-2012/172490
- WO-A1-2018/021685
- KR-A- 20170 025 395
- KR-A- 20200 025 899

## Beschreibung

Die vorliegende Erfindung betrifft einen Alphastrahlendetektor mit einer Messkammer in Form eines zylindrischen Messrohres, deren Kammerinnenwandung wenigstens teilweise mit einem Szintillationsmaterial versehen ist und die wenigstens eine Gaseintrittsöffnung aufweist, wenigstens einem optischen Sensor und wenigstens einer Elektronik, wobei der Alphastrahlendetektor einen die wenigstens eine Gaseintrittsöffnung überdeckenden Gaseinlassdeckel aufweist, in dem wenigstens eine Gaseinlassöffnung ausgebildet ist, wobei zwischen der wenigstens einen Gaseinlassöffnung und der wenigstens einen Gaseintrittsöffnung eine Gasumleitstruktur mit einer lichtundurchlässigen, bogen-und/oder winkelförmigen Wandstruktur angeordnet ist.

Alphastrahlung ist radioaktive Teilchenstrahlung, die beim Zerfall von Atomkernen auftritt. In der Natur vorkommende Alphastrahler sind beispielsweise Uran und Thorium sowie deren Zerfallsprodukte Radium und Radon. Das radioaktive Gas Radon kommt in unterschiedlichen Konzentrationen überall in unserer Umwelt, jedoch verstärkt beispielsweise in Uranabbaugebieten vor. Wenn radioaktive Alphastrahler eingeatmet oder auf sonstige Weise im menschlichen Organismus eingelagert werden, ist dies stark gesundheitsgefährdend, da Alphastrahlung lebende Zellen, insbesondere DNA, schädigt, wodurch beispielsweise Lungenkrebs verursacht werden kann.

Es besteht daher ein Bedarf an einem geeigneten Messgerät zur Detektion von Alphastrahlung. Zum Nachweis von Alphastrahlung können grundsätzlich alle Arten von Teilchendetektoren eingesetzt werden. Ein Messgerät zur Detektion von Alpha-, Beta- und Gammastrahlung ist beispielsweise das Geiger-Müller-Zählrohr. Das Geiger-Müller-Zählrohr besteht im einfachsten Fall aus einem an beiden Seiten verschlossenen zylindrischen Metallrohr, das eine Kathode bildet. Axial mittig in dem Zylinderrohr befindet sich ein als Anode dienender dünner Draht, der an einem Ende durch einen Isolator aus dem Zylinderrohr herausgeführt ist. An einem anderen Ende des Zylinderrohrs ist dieses durch eine massearme Folie, z. B. aus Glimmer oder PET-Folie, verschlossen, die dem Druckunterschied zur Außenluft standhalten kann, aber so beschaffen ist, dass Alphateilchen durch die Folie in das Zählrohr gelangen können. Das Zählrohr ist mit einem Edelgas, wie Argon oder Krypton, gefüllt. Zwischen Anode und Kathode wird eine Gleichspannung angelegt. Wenn Alphastrahlung, also ionisierende Strahlung, einfällt, schlägt sie aus den Edelgasatomen Elektronen heraus, die im elektrischen Feld zur Anode wandern und in der Lage sind, Elektronen aus weiteren Edelgasatomen herauszuschlagen. Die ionisierten Edelgasatome wandern zur Kathode: Dabei entsteht ein kurzer, messbarer Stromfluss, der proportional zur Strahlungsstärke ist.

Mit einem Geiger-Müller-Zählrohr muss man relativ lange messen, um überhaupt einen Impuls ermitteln zu können, da die Detektorfläche sehr klein und die gesundheitsschädliche Alpha-Aktivität verhältnismäßig zu anderen radioaktiven Prozessen gering ist. Problematisch ist außerdem bei älteren Geiger-Müller-Zählrohren, dass sie mit der Zeit undicht werden und das Edelgas nicht mehr halten können.

Es werden daher im Stand der Technik auch auf anderen Wirkmechanismen basierende Alphastrahlendetektoren, wie beispielsweise Szintillationszähler, eingesetzt. In Szintillationszählern kommt ein Leuchtstoff zum Einsatz, dessen Moleküle infolge von Stoßprozessen mit geladenen Teilchen angeregt werden und die Anregungsenergie in Form von Licht wieder abgeben. Die dabei entstehenden Lichtblitze können beispielsweise durch optische Sensoren erfasst und dadurch die Anzahl der auf den Leuchtstoff auftreffenden geladenen Teilchen gezählt werden.

Aus der Druckschrift EP 3 825 735 A1 ist ein Alphastrahlendetektor der eingangs angegebenen Gattung bekannt, der auf dem Szintillatorprinzip basiert. Der bekannte Alphastrahlendetektor weist eine lichtundurchlässige Messkammer in Form einer Haube auf, die auf einer Leiterplatte sitzt. Dabei ist ein ringförmiger Bereich der Haube zwar lichtdicht, aber luft- und damit radondurchlässig ausgebildet. Eine Innenwand der Messkammer ist mit Szintillationsmaterial beschichtet, das bei Auftreffen von Alphastrahlung Lichtimpulse erzeugt, die von einem auf der Leiterplatte befindlichen optischen Sensor erfasst werden.

Nachteilig ist bei diesem Alphastrahlendetektor, dass das luftdurchlässige Material in dem ringförmigen Bereich der Haube nicht komplett lichtdicht gestaltet werden kann, ohne den Lufteintritt in die Messkammer zu behindern. Dadurch ergibt sich eine Trägheit des bekannten Alphastrahlendetektors, da in ihn nur wenig Luft eindringen kann. Ein weiterer Nachteil des bekannten Alphastrahlendetektors ist, dass damit nur relativ statische Messungen möglich sind, da kein kontinuierlicher Luftaustausch gegeben ist.

Die Druckschrift EP 0 470 054 A2 beschreibt eine Überwachungsvorrichtung zur Messung einer Radonkonzentration. Die Überwachungsvorrichtung weist eine zylinderförmige Szintillationskammer auf, die mit einem Zinksulfid beschichtet ist. Zur Messung einer Radonkonzentration ist die Szintillationskammer mit einem Photovervielfacher gekoppelt. Durch ein Koaxialkabel ist der Photovervielfacher mit einer elektronischen Messanordnung verbunden, die einen programmierbaren Mikroprozessor aufweist. An einer Gasein- bzw. -auslassöffnung der Szintillationskammer ist ein durch einen Filterhalter gehaltener Filter angeordnet. In Räumen, in denen die Lichtintensität sehr hoch ist, wird dem Filter eine mit dem Filterhalter verschraubte Labyrinthvorrichtung vorgeschaltet. Die Labyrinthvorrichtung ist durch zwei Ringe unterschiedlicher Größe ausgebildet, wobei zwischen dem ersten und dem zweiten Ring ein Spalt vorgesehen ist und die beiden Ringe zueinander versetzte Strömungsöffnungen aufweisen.

In der Druckschrift WO 2018/021685 A1 ist eine Strahlenmessvorrichtung beschrieben, die ein erstes und ein zweites Gehäuseteil aufweist. Mittig des ersten Gehäuseteils ist auf dessen Boden eine innen halbrund ausgebildete, unten offene Fotokatalysevorrichtung in Form eines mit einer Zinksulfid-Silber-Beschichtung versehenen Szintillators aufgesetzt. Zwischen der Fotokatalysevorrichtung und einer in einer Wandung des ersten Gehäuseteils vorgesehenen Lufteinlassöffnung sind Lichtblockierelemente angeordnet, die dazu führen, dass ein Luftstrom mäanderförmig zu der Fotokatalysevorrichtung geführt wird. Durch weitere Lichtblockierelemente, die der Fotokatalysevorrichtung nachfolgend angeordnet sind, wird der aus der Fotokatalysevorrichtung austretende Luftstrom mäanderförmig zu einer in dem zweiten Gehäuseteil eingebrachten Luftauslassöffnung geführt. Die Lichtblockierelemente können auch an dem zweiten Gehäuseteil oder dem ersten Gehäuseteil und dem zweiten Gehäuseteil angebracht sein. Durch ein unterhalb der Fotokatalysevorrichtung in dem ersten Gehäuseteil eingebrachtes Loch ist ein optischer Sensor an der nach unten hin offenen Fotokatalysevorrichtung angeordnet. Der optsche Sensor ist auf einer separaten Leiterplatte angeordnet, die in eine Montagevertiefung auf der Rückseite des ersten Gehäuseteils eingesetzt ist. Die Strahlenmessvorrichtung ist mit einer Steuereinheit gekoppelt, die auch auf der Leiterplatte vorgesehen sein kann.

Die Druckschrift KR 2017 0025395 A beschreibt eine Radongaserfassungsvorrichtung. Die Radongaserfassungsvorrichtung umfasst eine zylinderförmige Radonsensoreinheit, deren Innenseite eine ZnS (Ag)-Beschichtung aufweist. An einer unteren Wandfläche der Reaktionskammer ist eine Solarzelleneinheit zum Detektieren von emittierten Photonen angebracht. Die Solarzelleneinheit weist mittig eine Eingangsöffnung auf. Die Eingangsöffnung überdeckend ist an der Reaktionskammer eine Zylindereinheit angeordnet. Die Zylindereinheit weist mehrere Teilungsplatten auf, die bewirken, dass Luft mäanderförmig zu der Eingangsöffnung strömt. Die Radonsensoreinheit ist mit einer Steuereinheit gekoppelt, welche die gemessenen Werte auswertet und überwacht.

Die Druckschrift KR 2020 0025899 A offenbart eine Radioaktivitätsmessvorrichtung mit zwei kreisförmigen Gehäusehälften. In der ersten Gehäusehälfte ist ein Leiterplattenmodul mit einem optischen Sensor angeordnet. Bei der Radioaktivitätsmessvorrichtung wird vorzugsweise ein Silizium-Photovervielfacher verwendet. Dem optischen Sensor gegenüberliegend ist in der zweiten Gehäusehälfte eine photokatalytische Komponente in Form eines Szintillators angeordnet. In einem Rand der ersten Gehäusehälfte sind mehrere neben- und übereinander angeordnete Lufteinlässe angeordnet. Nahe ihrem Rand weist die erste Gehäusehälfte eine um das Leiterplattenmodul herum verlaufende, lichtundurchlässige Trennwand auf, welche durch die Lufteinlässe einfallendes Licht abschirmt. Die zweite Gehäusehälfte weist eine aus einer Grundfläche der zweiten Gehäusehälfte auskragende Trennwand auf, um auch durch die Lufteinlässe einfallendes Licht abzuschirmen. In das Gehäuse einströmende Luft wird durch die Trennwände mäanderförmig zu der photokatalytischen Komponente und dem optischen Sensor geleitet.

Die Druckschrift WO 2012/172490 A1 offenbart eine Aufnahmevorrichtung für einen Sensor zur Bestimmung einer Radonkonzentration. Die Aufnahmevorrichtung weist eine Messkammer auf, die einer Aufnahme des Sensors dient. Dabei kommt ein Detektionsprinzip zum Einsatz, bei dem kein Szintillationsmaterial verwendet wird. Stattdessen werden die Ionen der Zerfallsprodukte direkt detektiert, also kein Lichtblitz eines Szintillationsmaterials. Eine Wand der Messkammer ist aus einem leitfähigen Metall, wie beispielsweise Aluminium, ausgebildet. Dies ermöglicht eine elektrostatische Anziehung von Radontochterionen auf den in der Messkammer befindlichen Sensor, wobei eine Sensoroberfläche als Minuspol und die Wand der Messkammer als Pluspol ausgebildet ist. Auf diese Weise werden die positiv geladenen Tochterionen von der Wand weggedrückt und zum Sensor hingezogen. Sobald sich Tochterionen auf der Sensoroberfläche befinden, werden die durch den radioaktiven Zerfall erzeugten Alphateilchen vom Sensor erfasst, der ein elektrisches Signal an ein Signalauslesemodul sendet. Der Messkammer ist in Strömungsrichtung eine deckelförmig ausgebildete Einlasskammer vorgelagert. Die Einlasskammer weist in ihrem Rand mehrere Luftöffnungen auf. Im Inneren der Einlasskammer weist diese mehrere Trennelemente auf, die die Einlasskammer in vier Bereiche unterteilen. Durch die Trennelemente wird in die Einlasskammer einströmende Luft spiralförmig seitlich zu einem der Messkammer vorgelagerten Filter geleitet. Eine analoge Konstruktion ist auch auf der Oberseite der Messkammer für eine Luftauslass vorgesehen.

Es ist daher die Aufgabe der vorliegenden Erfindung, einen auf dem Szintillatorprinzip basierenden Alphastrahlendetektor zur Verfügung zu stellen, bei dem eine kontinuierliche Luft- bzw. Gasdurchströmung der Messkammer realisiert werden kann, ohne dass Licht in die Messkammer eindringt.

Die Aufgabe wird durch einen Alphastrahlendetektor mit einer Messkammer in Form eines zylindrischen Messrohres gelöst, deren Kammerinnenwandung wenigstens teilweise mit einem Szintillationsmaterial versehen ist und die wenigstens eine Gaseintrittsöffnung aufweist, wenigstens einem optischen Sensor und wenigstens einer Elektronik, wobei der Alphastrahlendetektor einen die wenigstens eine Gaseintrittsöffnung überdeckenden Gaseintrittsdeckel aufweist, in dem wenigstens eine Gaseinlassöffnung ausgebildet ist, wobei zwischen der wenigstens einen Gaseinlassöffnung und der wenigstens einen Gaseintrittsöffnung eine Gasumleitstruktur mit einer lichtundurchlässigen, bogen- und/oder winkelförmigen Wandstruktur angeordnet ist, wobei die Messkammer wenigstens eine der wenigstens einen Gaseintrittsöffnung gegenüberbefindliche Gasaustrittsöffnung aufweist, wobei der Alphastrahlendetektor einen die wenigstens eine Gasaustrittsöffnung überdeckenden Gasauslassdeckel aufweist, in dem wenigstens eine Gasauslassöffnung ausgebildet ist, und wobei zwischen der wenigstens einen Gasauslassöffnung und der wenigstens einen Gasaustrittsöffnung eine Gasumleitstruktur mit einer lichtundurchlässigen, bogen- und/oder winkelförmigen Wandstruktur angeordnet ist, der Gaseinlassdeckel an einer Unterseite und der Gasauslassdeckel an einer Oberseite des Alphastrahlendetektors angeordnet sind, wobei die Elektronik wenigstens teilweise in dem Gaseinlassdeckel angeordnet ist, und wobei die Elektronik auf einer Deckelinnenplatte des Gaseinlassdeckels angeordnet ist.

Bei dem erfindungsgemäßen Alphastrahlendetektor gelangt Luft bzw. Gas durch die wenigstens eine in dem Gaseinlassdeckel ausgebildete Gaseinlassöffnung zunächst in einen zwischen dem Gaseinlassdeckel und der Messkammer ausgebildeten Übergangsbereich, der die Gasumleitstruktur aufweist. Entlang der Gasumleitstruktur kann Luft bzw. Gas problemlos von der Gaseinlassöffnung zu der Gaseintrittsöffnung der Messkammer und somit in die Messkammer gelangen. Die Gasumleitstruktur verhindert jedoch, dass durch die Gaseinlassöffnung in den Übergangsbereich eindringendes Licht bis zu der Gaseintrittsöffnung und somit in die Messkammer gelangt. Die lichtundurchlässige Wandstruktur der Gasumleitstruktur bildet eine seitliche Begrenzung der Gasumleitstruktur, mittels welcher durch die Gaseinlassöffnung in den Übergangsbereich eindringendes Licht nicht seitlich aus der Gasumleitstruktur entweichen kann. Die Wandstruktur erstreckt sich hierfür vorzugsweise von einer Innenseite des Gaseinlassdeckels bis zu einer durch den Gaseinlassdeckel überdeckten Außenseite der Messkammer. Die Wandstruktur weist eine Geometrie auf, die derart gebogen und/oder verwinkelt ist, dass durch die Gaseinlassöffnung in einen Anfang des Übergangsbereiches einfallendes Licht derart abgeschirmt wird, dass kein Licht bis zu der wenigstens einen Gaseintrittsöffnung vordringt. Die Wandstruktur kann dabei aus einem einzigen Wandelement oder aus mehreren Wandelementen bestehen.

Die Gasumleitstruktur ermöglicht somit einen guten Luftzugang zu der Messkammer ohne Beeinträchtigung des Messergebnisses durch Umgebungslicht.

Bei dem erfindungsgemäßen Alphastrahlendetektor ist die Messkammer an ihrer Kammerinnenwandung mit dem Szintillationsmaterial wenigstens teilweise, vorzugsweise vollflächig, beschichtet. Die/das in die Messkammer gelangende Luft/Gas kommt somit gut mit dem Szintillationsmaterial in Kontakt, wodurch der in der Luft bzw. dem Gas enthaltene Alphastrahler mittels Alphateilchen vorteilhaft mit dem Szintillationsmaterial wechselwirken kann.

Vorzugsweise befindet sich der wenigstens eine optische Sensor ebenfalls an der Kammerinnenwandung. Da sich außer der Luft bzw. dem Gas typischerweise sonst nichts innerhalb der Messkammer befindet, kann somit der optische Sensor sehr gut die bei der Wechselwirkung zwischen den Alphateilchen und dem Szintillationsmaterial entstehenden Funken oder Blitze optisch erfassen.

Als Szintillationsmaterial kann beispielsweise Zinksulfid mit Silberdotierung verwendet werden.

Die Messkammer kann beliebig lang sein. Je länger die Messkammer, umso mehr Kammerinnenoberfläche steht zur Verfügung, die mit dem Szintillationsmaterial versehen werden kann, und umso empfindlicher ist der Alphastrahlendetektor.

Der erfindungsgemäße Alphastrahlendetektor weist eine hohe Sensitivität und eine sehr schnelle Ansprechbarkeit an. Darüber hinaus ist der erfindungsgemäße Alphastrahlendetektor sehr langlebig.

Der erfindungsgemäße Alphastrahlendetektor besitzt ferner den Vorteil, dass bei der Messung von Alphastrahlen beispielsweise der jeweilige Luftdruck, z. B. durch Anordnung eines Druckmessers in der Messkammer oder in einem der Deckel, mit in die Messung bzw. deren Auswertung einbezogen werden kann, um so die Genauigkeit der Auswertung zu erhöhen.

Bei der vorliegenden Erfindung weist die Messkammer wenigstens eine der wenigstens einen Gaseintrittsöffnung gegenüberbefindliche Gasaustrittsöffnung auf, wobei der Alphastrahlendetektor einen die wenigstens eine Gasaustrittsöffnung überdeckenden Gasauslassdeckel aufweist, in dem wenigstens eine Gasauslassöffnung ausgebildet ist, wobei zwischen der wenigstens einen Gasauslassöffnung und der wenigstens einen Gasaustrittsöffnung eine Gasumleitstruktur mit einer lichtundurchlässigen Wandstruktur angeordnet ist.

Auch auf der Gasauslassseite des Alphastrahlendetektors ist ein Lichtschutz durch die dort angeordnete Gasumleitstruktur realisiert. Es kann somit kein durch die Gasauslassöffnung in einen zwischen den Gasauslassdeckel und die Messkammer befindlichen Übergangsbereich einfallendes Licht durch die Gasaustrittsöffnung in die Messkammer gelangen.

Somit kann eine kontinuierliche Luft- bzw. Gasdurchströmung der Messkammer realisiert werden, ohne dass Licht in die Messkammer eindringt. Eine Verfälschung des Messergebnisses durch Umgebungslicht wird somit auch hier unterbunden. Der erfindungsgemäße Alphastrahlendetektor weist bedingt durch den hohen Luftdurchsatz eine Effizienz auf, die mehr als sechsmal so hoch wie die eines Geigerzählers ist.

Bei der vorliegenden Erfindung sind der Gaseinlassdeckel an einer Unterseite und der Gasauslassdeckel an einer Oberseite des Alphastrahlendetektors angeordnet, wobei die Elektronik wenigstens teilweise in dem Gaseinlassdeckel angeordnet ist.

Die Erfindung besitzt den Vorteil, dass in den Gaseinlassdeckel eindringende Luft bzw. darin eindringendes Gas bei angeschlossener Elektronik dadurch, dass sich die Elektronik im Betrieb erwärmt, ebenfalls erwärmt wird und infolge des Kamineffektes nach oben, in Richtung der Messkammer und dann in Richtung des an der Oberseite des Alphastrahlendetektors befindlichen Gasauslasses strömt. Dadurch ergibt sich eine kontinuierliche Luft- bzw. Gasdurchströmung der Messkammer. Bei der Erfindung weist die wenigstens eine Gaseintrittsöffnung wenigstens eine bodenseitige Gasdurchtrittsöffnung auf und die wenigstens eine Gasaustrittsöffnung weist wenigstens eine deckenseitige Gasdurchtrittsöffnung der Messkammer des Alphastrahlendetektors auf, zwischen welchen Luft bzw. Gas durch die Messkammer strömt, wobei darin enthaltene Alphastrahler mittels Alphateilchen in Wechselwirkung mit dem Szintillationsmaterial treten, dabei Funken oder Blitze erzeugen und diese dann durch den wenigstens einen optischen Sensor erfasst werden.

Die jeweilige Gasumleitstruktur kann unterschiedliche Geometrien aufweisen. Es hat sich als besonders günstig erwiesen, wenn die Gasumleitstruktur wenigstens eine Labyrinthstruktur und/oder wenigstens eine Spiralstruktur und/oder wenigstens eine Mäanderstruktur und/oder eine Penrose-Kavität aufweist. Die genannten Geometrien können jeweils in Form einer zusammenhängenden Struktur oder aus einzelnen Strukturelementen ausgebildet sein. Die wenigstens eine Spiralstruktur empfiehlt sich beispielsweise dann, wenn die Messkammer wie bei dem erfindungsgemäßen Alphastrahlendetektor zylindrisch ausgebildet ist und in dem Gaseinlassdeckel und/oder Gasauslassdeckel nur eine mittig angeordnete Gaseinlass- bzw. Gasauslassöffnung aufweist. Ist die Messkammer beispielsweise quaderförmig ausgebildet, was nicht in den Schutzbereich der Ansprüche fällt, ist die Ausbildung der Gasumleitstruktur in Form wenigstens einer Mäander- oder Labyrinthstruktur von Vorteil, da solche Strukturen besonders gut an eine rechteckige Deckelfläche angepasst werden können. Eine Gasumleitstruktur in Form einer Penrose-Kavität hat den Vorteil, dass sie einfallendes Licht schon direkt angrenzend an den jeweiligen Lichteinfallsbereich, also an der Gaseinlassöffnung bzw. der Gasauslassöffnung, aufhält, wodurch nur ein geringer Platzbedarf für die Gasumleitstruktur vorgesehen werden muss und beispielsweise andere Bereiche in dem Gaseinlassdeckel für den Einbau der Elektronik genutzt werden können.

In einer zweckmäßigen Ausführungsform der vorliegenden Erfindung ist die Messkammer als innen hohles Messrohr ausgebildet, und der Gaseinlassdeckel und der Gasauslassdeckel sind als Kappen ausgebildet, die auf das Messrohr aufgesetzt sind oder teilweise in das Messrohr eingesteckt sind. In einfachen Ausgestaltungen der Erfindung sind das Messrohr und die Kappen spritzgegossene oder 3D-gedruckte Kunststoffteile.

Bevorzugte Ausführungsformen der vorliegenden Erfindung werden im Folgenden anhand von Figuren näher erläutert, wobei
- Figur 1: schematisch eine Ausführungsform des erfindungsgemäßen Alphastrahlendetektors in einer Vorderansicht zeigt;
- Figur 2: den Alphastrahlendetektor aus Figur 1 in einer geschnittenen Seitenansicht zeigt;
- Figur 3: schematisch eine mögliche Variante eines Gaseinlassdeckels oder Gasauslassdeckels einer Ausführungsform des erfindungsgemäßen Alphastrahlendetektors in einer Außenansicht zeigt;
- Figur 4: schematisch eine Variante einer Gasumleitstruktur eines Gaseinlassdeckels oder Gasauslassdeckels einer Ausführungsform des erfindungsgemäßen Alphastrahlendetektors in einer perspektivischen Ansicht zeigt;
- Figur 5: schematisch eine andere Variante einer Gasumleitstruktur eines Gaseinlassdeckels oder Gasauslassdeckels einer Ausführungsform des erfindungsgemäßen Alphastrahlendetektors in einer perspektivischen Ansicht zeigt; und
- Figur 6: schematisch noch eine andere Variante einer Gasumleitstruktur eines Gaseinlassdeckels oder Gasauslassdeckels einer Ausführungsform des erfindungsgemäßen Alphastrahlendetektors in einer Draufsicht zeigt.

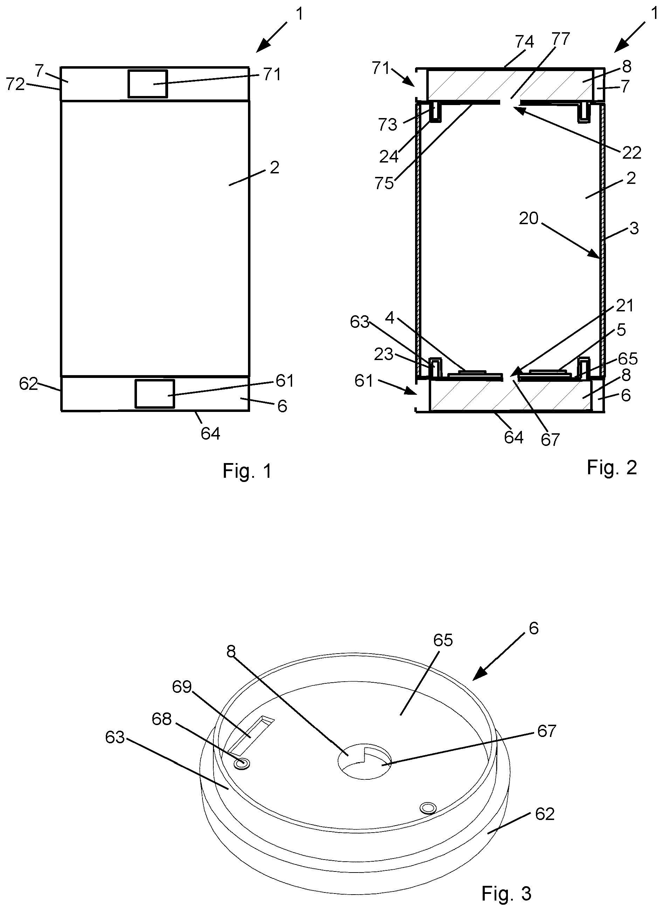

Figur 1 zeigt schematisch eine Ausführungsform eines erfindungsgemäßen Alphastrahlendetektors 1 in einer Vorderansicht. Figur 2 zeigt den Alphastrahlendetektor 1 aus Figur 1 schematisch in einer geschnittenen Seitenansicht.

Der Alphastrahlendetektor 1 weist eine Messkammer 2 auf, die gemäß der Erfindung in Form eines zylindrischen Messrohres ausgebildet ist. Eine Kammerinnenwandung 20 der Messkammer 2 ist mit einem Szintillationsmaterial 3 beschichtet. In der gezeigten Ausführungsform ist das Szintillationsmaterial 3 Zinksulfid mit einer Silberdotierung (ZnS:Ag). Es sind jedoch auch andere Materialien als Szintillationsmaterial 3 einsetzbar. In der gezeigten Darstellung ist die gesamte Kammerinnenwandung 20 mit dem Szintillationsmaterial 3 beschichtet. In anderen Ausführungsformen der vorliegenden Erfindung kann die Kammerinnenwandung 20 auch nur teilweise mit dem Szintillationsmaterial 3 beschichtet sein.

Der Alphastrahlendetektor 1 weist ferner einen auf eine Unterseite der Messkammer 2 aufgesetzten Gaseinlassdeckel 6 und einen auf einer Oberseite der Messkammer 2 aufgesetzten Gasauslassdeckel 7 auf. In Ausführungsformen der vorliegenden Erfindung können zu der Messkammer 2 ausgerichtete Innenoberflächen des Gaseinlassdeckels 6 und/oder des Gasauslassdeckel 7 wenigstens teilweise mit dem Szintillationsmaterial 3 beschichtet sein. Sie können jedoch auch nicht mit dem Szintillationsmaterial 3 beschichtet sein.

In einem Deckelrand 62 des Gaseinlassdeckels 6 ist eine Gaseinlassöffnung 61 ausgebildet. In einem Deckelrand 72 des Gasauslassdeckels 7 ist eine Gasauslassöffnung 71 ausgebildet. Die Gaseinlassöffnung 61 und die Gasauslassöffnung 71 sind jeweils als Fenster oder Schlitze ausgebildet, durch die Luft bzw. Gas in den Gaseinlassdeckel 6 eindringen und aus dem Gasauslassdeckel 7 herausströmen kann.

In der gezeigten Ausführungsform weist der Gaseinlassdeckel 6 einen von seinem Deckelrand 62 nach innen versetzten, in Richtung der Messkammer 2 ausgerichteten, ringförmigen Kragen 63 auf, der in eine ringförmige Nut 23 an der Unterseite der Messkammer 2 eingesetzt ist. Alternativ kann die Nut 23 auch weggelassen werden und stattdessen der Kragen 63 direkt an der Kammerinnenwandung 20 anliegen.

Ferner weist in der gezeigten Darstellung der Gasauslassdeckel 7 einen von seinem Deckelrand 72 nach innen versetzten, in Richtung der Messkammer 2 ausgerichteten, ringförmigen Kragen 73 auf, der in eine ringförmige Nut 24 an der Oberseite der Messkammer 2 eingesetzt ist. Auch hier kann alternativ die Nut 24 weggelassen werden und der Kragen 73 direkt an der Kammerinnenwandung 20 anliegen.

Um eine lichtdichte, mechanisch feste Verbindung zwischen dem Gaseinlassdeckel 6 und der Messkammer 2 sowie zwischen dem Gasauslassdeckel 7 und der Messkammer 2 auszubilden, ist bei der gezeigten Ausführungsform jeweils zwischen dem Kragen 63, 73 und der Nut 23, 24 ein schwarzer Kleber vorgesehen. Alternativ oder zusätzlich kann um die jeweiligen Verbindungsstellen zwischen dem Gaseinlassdeckel 6 und der Messkammer 2 bzw. zwischen dem Gasauslassdeckel 7 und der Messkammer 2 schwarzes Isolierband vorgesehen sein.

Somit sind bei der gezeigten Ausführungsform sowohl der Gaseinlassdeckel 6 als auch der Gasauslassdeckel 7 jeweils als Kappe ausgebildet, die auf die als Messrohr ausgebildete Messkammer 2 aufgesetzt sind.

Das Messrohr kann beispielsweise eine Länge in einem Bereich von wenigen Zentimetern, wie beispielsweise 8 cm, oder mehreren 10 cm, wie beispielsweise 80 cm, bis über einen Meter, wie beispielsweise 1,5 m, 2 m oder länger, aufweisen. Das Messrohr hat vorzugsweise einen Innendurchmesser, der nicht größer als 10 cm ist, und welcher beispielweise 6,8 cm beträgt.

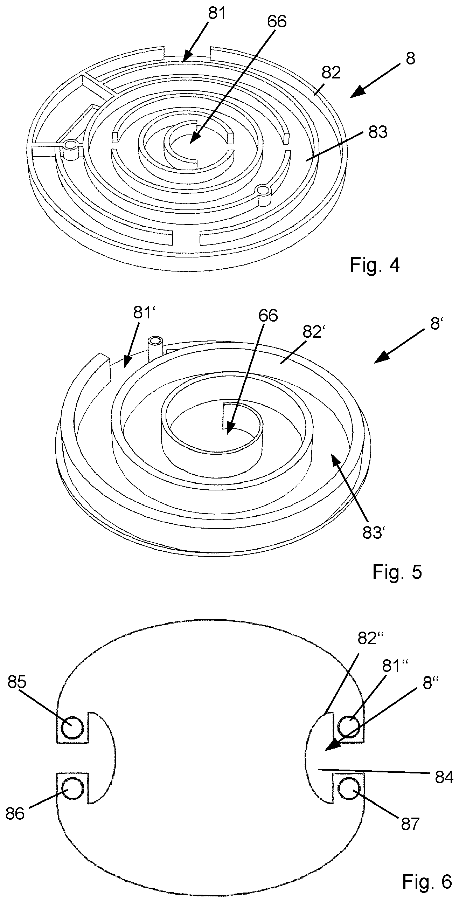

Die Gaseinlassöffnung 61 des Gaseinlassdeckels 6 mündet in einen Innenbereich des Gaseinlassdeckels 6, in dem eine Gasumleitstruktur 8 angeordnet ist. Bei dem in Figur 3 gezeigten Ausführungsbeispiel des Gaseinlassdeckels 6 ist die Gasumleitstruktur 8 eine Labyrinthstruktur, wie sie beispielsweise in Figur 4 dargestellt ist.

Dabei gelangt Luft bzw. Gas zunächst über einen Außeneingang 81 der Gasumleitstruktur 8 in die aus einer Mehrzahl gewölbter und zueinander versetzt angeordneter Wände 82 bestehende Labyrinthstruktur. Anstelle oder zusätzlich zu den gewölbten Wänden 82 kann eine Wandstruktur auch mit eckigen Kanten oder Winkeln bei der Labyrinthstruktur eingesetzt werden. Zwischen den Wänden 82 sind jeweils Kanäle 83 ausgebildet, entlang welcher die Luft bzw. das Gas strömen kann. Die Wände 82 erstrecken sich zwischen der Deckelaußenplatte 64 und der Deckelinnenplatte 65 des Gaseinlassdeckels 6.

In einem Deckelmittelbereich 66 ist in der Deckelinnenplatte 65 eine Deckelinnenöffnung 67 ausgebildet, die der Gaseintrittsöffnung 21 der Messkammer 2 gegenüber angeordnet ist. Entsprechend kann Luft bzw. Gas, die/das durch die Labyrinthstruktur geleitet wurde, durch die Gaseintrittsöffnung 21 in die Messkammer 2 eintreten.

In der in die Messkammer 2 gelangenden Luft oder dem in die Messkammer 2 gelangenden Gas enthaltene Alphastrahler treten mittels Alphateilchen in Wechselwirkung mit dem an der Kammerinnenwandung 20 befindlichen Szintillationsmaterial 3. Dabei entstehen Funken oder Blitze, die durch den optischen Sensor 4 erfasst werden. Der optische Sensor 4 ist hierfür so angeordnet, dass er eine freie Sicht auf die Kammerinnenwandung 20 besitzt. In der gezeigten Ausführungsform ist der optische Sensor 4 auf einer Deckelinnenplatte 65 des Gaseinlassdeckels 6 angeordnet.

Sensorsignale des Sensors 4 werden an die Elektronik 5 weitergeleitet. Die Elektronik 5 weist bei der gezeigten Ausführungsform einen Verstärker und einen Zähler auf, mit dem die Anzahl der durch den optischen Sensor 4 erfassten optischen Impulse pro Zeiteinheit gezählt wird.

Durch den Betrieb der Elektronik 5 erwärmt diese einen die Elektronik umgebenden unteren Bereich des Alphastrahlendetektors 1. Dies führt dazu, dass die erwärmte Luft bzw. das Gas innerhalb der Messkammer 2 nach oben steigt. Dadurch ergibt sich ein kontinuierlicher Luft- bzw. Gastransport durch die Messkammer 2.

Der an der Oberseite der Messkammer 2 befindliche Gasauslassdeckel 7 ist wie der Gaseinlassdeckel 6 aufgebaut, weist jedoch nicht die Elektronik 5 auf.

Luft bzw. Gas, die/das die Messkammer 2 durchströmt hat, tritt an der Gasaustrittsöffnung 22 aus der Messkammer 2 aus und durch eine in einem Deckelmittelbereich des Gasauslassdeckels 7 befindliche Deckelinnenöffnung 77 in einer Deckelinnenplatte 75 des Gasauslassdeckels 7 in einen Innenbereich des Gasauslassdeckels 7 ein. In dem Innenbereich des Gasauslassdeckels 7 befindet sich eine Gasumleitstruktur 8, die wie oben beschrieben als Labyrinthstruktur ausgebildet sein kann. Eine Möglichkeit der Ausbildung der Labyrinthstruktur ist in Figur 4 zu sehen. Die Luft bzw. das Gas strömt zwischen den Wänden 82 der Wandstruktur von innen nach außen bis hin zu der in dem Deckelrand 72 des Gasauslassdeckels 7 ausgebildeten Gasauslassöffnung 71.

Sowohl bei dem Gaseinlassdeckel 6 als auch bei dem Gasauslassdeckel 7 kann anstelle der Gasumleitstruktur 8 auch eine in Form einer Spiralstruktur ausgebildete Gasumleitstruktur 8', wie sie beispielsweise in Figur 5 dargestellt ist, oder eine in Form einer Penrose-Kavität ausgebildete Gasumleitstruktur 8", wie sie beispielsweise in Figur 6 dargestellt ist, verwendet werden. Weiter kann alternativ eine nicht gezeigte Mäanderstruktur anstelle der Gasumleitstruktur 8 verwendet werden.

Wird die Gasumleitstruktur 8' bei dem Gaseinlassdeckel 6 verwendet, befindet sich ein Außeneingang 81' der Spiralstruktur gegenüber einer Innenseite des Deckelrandes 62, sodass Luft bzw. Gas, die/das in die Gaseinlassöffnung 61 einströmt, durch den Außeneingang 81' in die Spiralstruktur eindringt. Dabei weist die Spiralstruktur eine sich von einer Deckelaußenplatte 64 bis zu einer Deckelinnenplatte 65 des Gaseinlassdeckels 6 erstreckende Wandstruktur auf, die sich spiralförmig bis zu einem Deckelmittelbereich 66 verjüngt, an dem in der Deckelinnenplatte 65 eine Deckelinnenöffnung 67 ausgebildet ist. Die Luft bzw. das Gas kann in einem zwischen den Wänden 82' der Wandstruktur gebildeten Kanal 83' strömen.

Ist die Spiralstruktur als Gasumleitstruktur 8' in dem Gasauslassdeckel 7 angeordnet, erfolgt darin die Luft- bzw. Gasströmung auf analoge Weise invers.

Wird die Gasumleitstruktur 8" bei dem Gaseinlassdeckel 6 verwendet, gelangt Luft bzw. Gas zunächst durch die Gaseinlassöffnung 61 und eine Eingangsöffnung 81" in eine Penrose-Kavität 84. Die Penrose-Kavität 84 weist Wände 82" auf, die sich von der Deckelaußenplatte 64 bis zu der Deckelinnenplatte 65 des Gaseinlassdeckels 6 erstrecken und ist so gestaltet, dass Licht, dass bei der Eingangsöffnung 81" einfällt, nicht zu einer Ausgangsöffnung 85 oder zu einer der anderen Öffnungen 86, 87 der Penrose-Kavität 84 gelangen kann. Der Ausgangsöffnung 85 und/oder wenigstens eine der anderen Öffnungen 86, 87 ist in fluider Kommunikation mit einer in der Deckelinnenplatte 65 des Gaseinlassdeckels 6 ausgebildeten Deckelinnenöffnung 67, welche wiederum der Gaseintrittsöffnung 21 der Messkammer 2 gegenüber ist.

Befindet sich die Gasumleitstruktur 8" in dem Gasauslassdeckel 7, erfolgt die Luft- bzw. Gasausströmung aus der Messkammer 2 bis zu der Gasauslassöffnung 71 in analoger Weise.

Die jeweiligen Gasumleitstrukturen 8, 8', 8" sowie die nicht gezeigte Mäanderstruktur können wahlweise auch zu einer Gasumleitstruktur kombiniert werden. Beispielsweise können zwei oder mehr der Gasumleitstrukturen 8, 8', 8" mehrstufig übereinander und/oder ineinander und/oder nacheinander angeordnet werden.

Während die Luft bzw. das Gas ungehindert über die jeweilige Gasleitstruktur 8, 8', 8" von der Gaseinlassöffnung 61 zu der Gaseintrittsöffnung 21 bzw. von der Gasauslassöffnung 71 zu der Gasaustrittsöffnung 22 und somit in die Messkammer 2 gelangen kann, ist dies für in die Gaseinlassöffnung 61 und in die Gasauslassöffnung 71 gelangendes Licht nicht möglich. Das Licht wird jeweils in der Gasleitstruktur 8, 8', 8" so stark abgeschwächt, sodass es Messungen von Alphastrahlen in der Messkammer 2 nicht verfälschen kann.

Bei dem in Figur 3 dargestellten Gaseinlassdeckel 6 sind auf der Deckelinnenplatte 65 Befestigungselemente 68, wie beispielsweise Befestigungslöcher, zum Befestigen der hier nicht dargestellten Elektronik 5 vorgesehen. Ferner ist in der Deckelinnenplatte 65 ein Ausschnitt 69 zum Durchführen von Anschlüssen für die auf der Deckelinnenplatte 65 angeordnete Elektronik 5 ausgebildet. Der Gasauslassdeckel 7 besitzt keine Elektronik und hat entsprechend auch keine Befestigungselemente 68 und auch nicht den Ausschnitt 69.

Bei der gezeigten Ausführungsform ist die Platine, auf der die Elektronik 5 angeordnet ist, weiß. Darüber hinaus sind auch sonst alle Innenoberflächen des Gaseinlassdeckels 6 und des Gasauslassdeckels weiß ausgebildet. Dadurch wird eine besonders hohe Reflexion von Strahlung im Inneren der Messkammer 2 erzielt, an der Kammerinnwandung 20 ausgebildete Blitze werden verstärkt.

## Patentansprüche

1. Alphastrahlendetektor (1) mit einer Messkammer (2) in Form eines zylindrischen Messrohres, deren Kammerinnenwandung (20) wenigstens teilweise mit einem Szintillationsmaterial (3) versehen ist und die wenigstens eine Gaseintrittsöffnung (21) aufweist, wenigstens einem optischen Sensor (4) und wenigstens einer Elektronik (5), wobei der Alphastrahlendetektor (1) einen die wenigstens eine Gaseintrittsöffnung (21) überdeckenden Gaseinlassdeckel (6) aufweist, in dem wenigstens eine Gaseinlassöffnung (61) ausgebildet ist, wobei zwischen der wenigstens einen Gaseinlassöffnung (61) und der wenigstens einen Gaseintrittsöffnung (21) eine Gasumleitstruktur (8, 8', 8") mit einer lichtundurchlässigen, bogen- und/oder winkelförmigen Wandstruktur angeordnet ist, **dadurch gekennzeichnet, dass** die Messkammer (2) wenigstens eine der wenigstens einen Gaseintrittsöffnung (21) gegenüberbefindliche Gasaustrittsöffnung (22) aufweist, wobei der Alphastrahlendetektor (1) einen die wenigstens eine Gasaustrittsöffnung (22) überdeckenden Gasauslassdeckel (7) aufweist, in dem wenigstens eine Gasauslassöffnung (71) ausgebildet ist, und wobei zwischen der wenigstens einen Gasauslassöffnung (71) und der wenigstens einen Gasaustrittsöffnung (22) eine Gasumleitstruktur (8, 8', 8") mit einer lichtundurchlässigen, bogen- und/oder winkelförmigen Wandstruktur angeordnet ist, wobei der Gaseinlassdeckel (6) an einer Unterseite und der Gasauslassdeckel (7) an einer Oberseite des Alphastrahlendetektors (1) angeordnet sind, wobei die Elektronik (5) wenigstens teilweise in dem Gaseinlassdeckel (6) angeordnet ist, und wobei die Elektronik (5) auf einer Deckelinnenplatte (65) des Gaseinlassdeckels (6) angeordnet ist.

2. Alphastrahlendetektor nach Anspruch 1, **dadurch gekennzeichnet, dass** die Gasumleitstruktur (8, 8', 8") wenigstens eine Labyrinthstruktur und/oder wenigstens eine Spiralstruktur und/oder wenigstens eine Mäanderstruktur und/oder eine Penrose-Kavität aufweist.

3. Alphastrahlendetektor nach einem der vorhergehenden Ansprüche, **dadurch gekennzeichnet, dass** die Messkammer (2) als innen hohles Messrohr ausgebildet ist und der Gaseinlassdeckel (6) und der Gasauslassdeckel (7) als Kappen ausgebildet sind, die auf das Messrohr aufgesetzt sind oder teilweise in das Messrohr eingesteckt sind.

## Claims

1. Alpha radiation detector (1) with a measuring chamber (2) in the form of a cylindrical measuring tube whose inner wall (20) is at least partially provided with a scintillation material (3) and which comprises at least one gas inlet opening (21), at least one optical sensor (4) and at least one electronics (5), wherein the alpha radiation detector (1) comprises a gas inlet cover (6) covering the at least one gas entry opening (21), in which at least one gas inlet opening (61) is formed, wherein a gas diversion structure (8, 8', 8") with an opaque, arc-shaped and/or angle-shaped wall structure is arranged between the at least one gas inlet opening (61) and the at least one gas entry opening (21), **characterized in that** the measuring chamber (2) comprises at least one gas exit opening (22) opposite the at least one gas entry opening (21), wherein the alpha radiation detector (1) has a gas outlet cover (7) covering the at least one gas exit opening (22), in which at least one gas outlet opening (71) is formed, and wherein a gas diversion structure (8, 8', 8") with an opaque, arc-shaped and/or angle-shaped wall structure is arranged between the at least one gas outlet opening (71) and the at least one gas exit opening (22), wherein the gas inlet cover (6) is arranged on a bottom side of the alpha radiation detector (1) and the gas outlet cover (7) is arranged on a top side of the alpha radiation detector (1), wherein the electronics (5) are arranged at least partially in the gas inlet cover (6), and wherein the electronics (5) are arranged on an inner cover plate of the gas inlet cover (6).

2. Alpha radiation detector according to claim 1, **characterized in that** the gas diversion structure (8, 8', 8") comprises at least one labyrinth structure and/or at least one spiral structure and/or at least one meander structure and/or one Penrose cavity.

3. Alpha radiation detector according to one of the preceding claims, **characterized in that** the measuring chamber (2) is designed as an internally hollow measuring tube and the gas inlet cover (6) and the gas outlet cover (7) are designed as caps that are placed on the measuring tube or are partially inserted into the measuring tube.

## Revendications

1. Détecteur de rayons alpha (1) comportant une chambre de mesure (2) sous forme de tube de mesure cylindrique et dont la paroi intérieure de chambre (20) est au moins partiellement revêtue d'un matériau de scintillation (3) et présente au moins une ouverture d'entrée de gaz (21), et comportant au moins un capteur optique (4) et au moins un équipement électronique (5), dans lequel le détecteur de rayons alpha (1) présente un couvercle d'admission de gaz (6) recouvrant l'au moins une ouverture d'entrée de gaz (21) et dans lequel est réalisée au moins une ouverture d'admission de gaz (61), dans lequel une structure de dérivation de gaz (8, 8', 8''), comportant une structure formant paroi opaque, arquée et/ou angulaire, est disposée entre l'au moins une ouverture d'admission de gaz (61) et l'au moins une ouverture d'entrée de gaz (21), **caractérisé en ce que** la chambre de mesure (2) présente au moins une ouverture de sortie de gaz (22) située en face de l'au moins une ouverture d'entrée de gaz (21), dans lequel le détecteur de rayons alpha (1) présente un couvercle d'échappement de gaz (7) recouvrant l'au moins une ouverture de sortie de gaz (22) et dans lequel est réalisée au moins une ouverture d'échappement de gaz (71), et dans lequel une structure de dérivation de gaz (8, 8', 8''), comportant une structure formant paroi opaque, arquée et/ou angulaire, est disposée entre l'au moins une ouverture d'échappement de gaz (71) et l'au moins une ouverture de sortie de gaz (22), dans lequel le couvercle d'admission de gaz (6) est disposé sur un côté inférieur et le couvercle d'échappement de gaz (7) est disposé sur un côté supérieur du détecteur de rayons alpha (1), dans lequel l'équipement électronique (5) est au moins partiellement disposé dans le couvercle d'admission de gaz (6), et dans lequel l'équipement électronique (5) est disposé sur une plaque intérieure (65) du couvercle d'admission de gaz (6).

2. Détecteur de rayons alpha selon la revendication 1,
**caractérisé en ce que** la structure de dérivation de gaz (8, 8', 8'') présente au moins une structure en labyrinthe et/ou au moins une structure en spirale et/ou au moins une structure en méandres et/ou une cavité de Penrose.

3. Détecteur de rayons alpha selon l'une des revendications précédentes, **caractérisé en ce que** la chambre de mesure (2) est réalisée sous forme de tube de mesure creux à l'intérieur et le couvercle d'admission de gaz (6) et le couvercle d'échappement de gaz (7) sont réalisés sous forme de capuchons qui sont placés sur le tube de mesure ou sont partiellement insérés dans le tube de mesure.
